# EUROPÄISCHE PATENTANMELDUNG

(11) **EP 4 442 620 A1**
(43) Veröffentlichungstag der Anmeldung: **09.10.2024**
(21) Anmeldenummer: 23166939.1
(22) Anmeldetag: 06.04.2023
(51) Int. Cl.: B65G 47/61, B65B 43/12

(54) **VORRICHTUNG FÜR DIE ÜBERGABE VON BEUTELN VON EINER BEUTELEINSPEISUNG AN EIN UMLAUFSYSTEM EINER BEUTELVERPACKUNGSMASCHINE, EINE ENTSPRECHENDE BEUTELVERPACKUNGSMASCHINE SOWIE EIN ENTSPRECHENDES VERFAHREN**

(71) Anmelder: SN Maschinenbau GmbH, 51688 Wipperführth (DE)
(72) Erfinder: Beinghaus, Jürgen, 51688 Wipperfürth (DE)
(74) Vertreter: Angerhausen, Christoph

(57) **Zusammenfassung**

Die Erfindung betrifft eine Vorrichtung (1) für die Übergabe von Beuteln (100) von einer Beuteleinspeisung (300) an ein Umlaufsystem (200) einer Beutelverpackungsmaschine, dadurch gekennzeichnet, dass die Vorrichtung (1) einen Förderer (3) für den liegenden Transport einzelner leerer Beutel (100) aufweist, wobei der Förderer (3) in seiner Förderrichtung (x) stromabwärtsseitig ein Hebeelement (4) für das Aufrichten einer ersten Kante (101) eines Beutels (100) aufweist. Es werden weiterhin eine entsprechende Beutelverpackungsmaschine sowie ein entsprechendes Verfahren beschrieben.

## Beschreibung

Die Erfindung betrifft eine Vorrichtung für die Übergabe von Beuteln von einer Beuteleinspeisung an ein Umlaufsystem einer Beutelverpackungsmaschine. Es werden weiterhin eine entsprechende Beutelverpackungsmaschine sowie ein entsprechendes Verfahren beschrieben.

Die DE 20 2014 102 116 U1 beschreibt eine Beutelverpackungsmaschine mit einem Rundgangsystem für den ausgerichteten Transport von Beuteln zwischen Verpackungsstationen der Verpackungsmaschine. Üblicherweise werden die Beutel von dem Rundgangsystem getaktet zwischen den Verpackungsstationen der Verpackungsmaschine transportiert. Es setzen sich mehr und mehr Verpackungsmaschinen durch, bei denen die Beutel in einer kontinuierlichen Bewegung zwischen den Verpackungsstationen von dem Rundgangsystem transportiert werden. Kontinuierliche haben gegenüber getakteten Systemen den Vorteil des geringeren Verschleißes sowie einer besseren Energieeffizienz. Dies hat zur Folge, dass die Einspeisung der Leerbeutel in das Umlaufsystem sowohl für den getakteten als auch für den kontinuierlichen Betrieb der Verpackungsmaschine ausgelegt sein sollte, um sowohl getaktete als auch kontinuierliche Systeme bedienen zu können.

Es ist daher die Aufgabe der Erfindung, eine Vorrichtung für die Übergabe von Beuteln von einer Beuteleinspeisung an ein Umlaufsystem einer Beutelverpackungsmaschine bereitzustellen, die sowohl für die kontinuierliche als auch die getaktete Übergabe von Leerbeuteln geeignet ist.

Diese Aufgabe wird durch eine Vorrichtung mit den Merkmalen des Anspruchs 1 gelöst. Eine entsprechende Beutelverpackungsmaschine ist Gegenstand des Anspruchs 11 und ein entsprechendes Verfahren Gegenstand des Anspruchs 12. Vorteilhafte Ausführungsformen sind jeweils Gegenstand der abhängigen Ansprüche.

Demgemäß ist bei der Vorrichtung vorgesehen, dass sie einen Förderer für den liegenden Transport einzelner leerer Beutel aufweist, wobei der Förderer in seiner Förderrichtung stromabwärtsseitig ein Hebeelement für das Aufrichten einer ersten Kante des Beutels aufweist.

Der Förderer, insbesondere seine Fördergeschwindigkeit in seiner Förderrichtung, und das Umlaufsystem, insbesondere dessen Umlaufgeschwindigkeit, können unabhängig voneinander betrieben werden. Die Umlaufgeschwindigkeit des Umlaufsystems kann von der Taktgeschwindigkeit der Beutelverpackungsmaschine abhängen. Die Fördergeschwindigkeit kann abhängig von der Taktgeschwindigkeit nach geführt werden. Der Förderer kann dazu eingerichtet sein, dem Umlaufsystem die liegenden Leerbeutel mit der aufgerichteten ersten Kante in einer an die Umlaufgeschwindigkeit des Umlaufsystems angepassten Geschwindigkeit bereitzustellen, sodass das Umlaufsystem die leeren Beutel an der ersten Kante von dem Förderer abnehmen kann. Das Umlaufsystem und der Förderer können in einem Übergabebereich zumindest abschnittsweise synchron laufen. Das Umlaufsystem und der Förderer können in dem Übergabebereich eine sehr geringe oder keine Relativgeschwindigkeit zueinander aufweisen. In dem Übergabebereich können die leeren Beutel die aufgestellte erste Kante aufweisen. Es kann vorgesehen sein, dass das Hebeelement in dem Übergabebereich angeordnet ist. Das Umlaufsystem kann dazu eingerichtet sein, einen Beutel in dem Übergabebereich an der ersten aufgestellten Kante zu greifen und von dem Förderer abzunehmen.

Der Förderer kann in der Förderrichtung eine kontinuierliche Fördergeschwindigkeit oder eine getaktete Fördergeschwindigkeit aufweisen.

Die leeren Beutel können insbesondere als Folienbeutel bereitgestellt sein, beispielsweise als Flachbeutelbeutel, Seitenfaltbeutel und/oder Standbodenbeutel. Die leeren Beutel können insbesondere in einem flachen und/oder zusammengefalteten Zustand bereitgestellt sein. Insbesondere können die Beutel für den besonders prozesssicheren Transport mit dem Förderer sowie die besonders prozesssichere Abnahme von dem Förderer mit Hilfe des Umlaufsystems eine erste Kante aufweisen, die als eine gerade erste Kante ausgebildet ist. Der liegende Leerbeutel kann eine Dicke senkrecht zur Folienebene, beispielsweise in der Vertikalrichtung, wenn der Beutel von dem Förderer transportiert wird, aufweisen, die sehr viel kleiner als eine Kantenlänge, beispielsweise kleiner als die Länge der ersten Kante des Beutels ist. Der liegende Leerbeutel kann sich somit im Wesentlichen in der Horizontalen erstrecken und eine im Vergleich zu seiner Horizontalerstreckung nur unwesentliche Dicke in der Vertikalrichtung aufweisen.

Das Hebeelement kann ein beliebiges Hebeelement sein, welches dazu eingerichtet ist, die erste Kante des Beutels aus der horizontalen Ebene des liegenden Beutels heraus anzuheben, sodass sie für einen Greifer des Umlaufsystems frei zugänglich, insbesondere von einer Auflage des Förderers, auf welcher der Beutel in dem Förderer aufliegt, abgehoben ist.

Das Hebeelement kann eine entlang der Förderrichtung ansteigende Rampe oder Anlaufschräge aufweisen. Das Hebeelement kann bei einer Ausführungsform einen die Förderbreite des Förderers senkrecht zur Förderrichtung in der Förderrichtung verjüngenden Anschlag für eine aufzurichtende erste Kante eines Beutels aufweisen. Dabei kann der Anschlag vorzugsweise in der Richtung senkrecht zur Förderrichtung verstellbar sein. Der Anschlag kann insbesondere in einer horizontalen Richtung verstellbar sein. Der Anschlag kann mit Hilfe eines Stellantriebs 6.1 in der genannten Richtung verstellbar sein. Mit Hilfe der Verstellbarkeit des Anschlagskann der Förderer auf eine gegebene Beutelhöhe eingestellt werden. Die Beutelhöhe kann als die Länge einer Seitenwand des Beutels betrachtet werden, die zwischen dem Beutelboden und der ersten Kante bemessen ist. Vorzugsweise ist der Beutel in einem liegenden und zusammengefalteten Zustand von dem Förderer transportiert, wobei sich die Höhe des Beutels in der Horizontalen und senkrecht zu der Förderrichtung erstreckt.

Die Beuteleinspeisung kann ein Beutelmagazin und/oder eine Beutelherstellung aufweisen und ist auf keine bestimmten Ausführungsformen beschränkt. Die Beuteleinspeisung kann beispielsweise eine Vorrichtung zur Vorproduktion von Folienbeuteln sein oder aufweisen. Die Beuteleinspeisung kann dazu eingerichtet sein, vorproduzierte Beutel vorzuhalten und zu vereinzeln, um sie in die Vorrichtung einzuspeisen.

Bei einer bevorzugten Ausführungsform kann die minimale Förderbreite um eine Abmessung kleiner als eine Beutelhöhe zwischen Beutelboden und Öffnung eines zu transportierenden Beutels sein, um welche die erste Kante des zu transportierenden Beutels aufgerichtet werden soll.

Der Förderer kann ein Haltemittel aufweisen, das dazu eingerichtet ist, einen Beutel an einer der ersten Kante gegenüberliegenden zweiten Kante zu halten. Das Haltemittel kann einen feststehenden Höhenanschlag und einen ersten Bandförderer aufweisen, die zwischen sich einen sich in der Förderrichtung erstreckenden Haltespalt für die Aufnahme und Führung der zweiten Kante einschließen.

Der Förderer kann einen ersten Bandförderer aufweisen, der mit einer der ersten Kante gegenüberliegenden zweiten Kante im Reibschluss steht. Alternativ oder zusätzlich kann der erste Bandförderer ein Stollenband sein, mit dem die liegenden Leerbeutel in der Förderrichtung transportiert sind.

Der Förderer kann dazu eingerichtet sein, den Beutel, jedoch ausschließlich der ersten Kante, in seiner Beutelebene, vorzugsweise in einer horizontalen Ebene, aufzuspannen, sodass die erste Kante frei beweglich bleibt. Dadurch wird es beispielhaft ermöglicht, dass der Beutel zum einen besonderes prozesssicher auf dem Förderer transportiert werden und andererseits die erste Kante ebenso prozesssicher von dem Hebeelement angehoben werden kann, insbesondere in eine aus der Horizontalebene herausgehobene Position.

Der Förderer kann einen ersten Bandförderer aufweisen, der an einer der ersten Kante gegenüberliegenden zweiten Kante angreift. Der Förderer kann einen zweiten Bandförderer aufweisen, der um eine Abmessung von der ersten Kante beabstandet an dem Beutel angreift. Die Abmessung kann demjenigen sich von der ersten Kante erstreckenden Anteil der Höhe des Beutels entsprechen, der dazu vorgesehen ist, um von dem Hebeelement angehoben zu werden, vorzugsweise aus einer horizontalen Ausrichtung heraus in eine demgegenüber angehobene Position.

Der erste Bandförderer und/oder der zweite Bandförderer können ein umlaufendes Stollenband aufweisen. Wenn der Förderer einen ersten Bandförderer und einen zweiten Bandförderer aufweist, weisen diese vorzugsweise dieselbe Umlaufgeschwindigkeit auf. Wenn der erste Bandförderer und der zweite Bandförderer darüber hinaus jeweils ein umlaufendes Stollenband aufweisen, können die Stollen der beiden Stollenbänder synchronisiert sein, so dass sie in der Förderebene senkrecht zur Förderrichtung gegenüberliegend auf derselben Höhe angeordnet sind.

Der zweite Bandförderer kann einen oberen Bandförderer und eine unteren Bandförderer auf. Zwischen dem oberen Bandförderer und im unteren Bandförderer kann die erste Beutelkante im Reibschluss mit dem oberen und/oder den unteren Bandförderer stehen. Der obere und der untere Bandförderer weisen vorzugsweise dieselbe Vorschubgeschwindigkeit auf, insbesondere können sie gleichlaufend sein. Demgemäß können die Transportbänder des oberen und des unteren Bandförderers keine Relativgeschwindigkeit zueinander aufweisen. Zwischen dem oberen Bandförderer und im unteren Bandförderern kann ein Anpressdruck bereitgestellt sein, der die erste Beutekante hält, vorzugsweise im Reibschluss hält.

Eine Beutelverpackungsmaschine kann ein Umlaufsystem mit einer Vielzahl in Transportrichtung des Umlaufsystems voneinander beabstandeter Beutelgreifer aufweisen. Die Beutelverpackungsmaschine kann weiterhin eine Beuteleinspeisung sowie eine Vorrichtung der zuvor beschriebenen Art aufweisen. Der Förderer kann in seiner Förderrichtung stromabwärts in einen Zugriffsbereich des Umlaufsystems münden. In dem Zugriffsbereich kann ein Beutelgreifer des Umlaufsystems in Eingriff mit einer aufgerichteten ersten Kante eines von dem Förderer liegend transportierten Beutels gelangen. Vorzugsweise, jedoch nicht zwingend, kann der Beutelgreifer in einer vertikalen Ebene entlang des Umlaufsystems geführt sein. Dabei kann vorgesehen sein, dass der Beutelgreifer in dem Zugriffsbereich entlang eines vertikalen Kreisbahnabschnitts geführt ist. Dadurch wird erreicht, dass der Beutelgreifer entlang einer Kreisbahn auf die angehobene erste Kante des Beutels zugeschwenkt ist, sodass die Kante beispielsweise zwischen in einer Offenstellung des Beutelgreifers voneinander beabstandeten Greiferbacken des Greifers positioniert wird. Der Beutelgreifer kann vorzugsweise in einer untersten Stellung des vertikalen Kreisbahnabschnitts, in welcher der Beutelgreifer im Wesentlichen horizontal und mit seinen Greiferbacken parallel zu der ersten Kante angeordnet ist, angesteuert werden, aus der Offenstellung der Greiferbacken in eine Schließstellung überführt zu werden, in der die Greiferbacken einander angenähert sind und zwischen sich die erste Kante halten.

Bei einem Verfahren für die Übergabe von Beuteln von einer Beuteleinspeisung an ein Umlaufsystem einer Beutelverpackungsmaschine können die folgenden Schritte vorgesehen sein:
a) Bereitstellen einer Vielzahl liegend angeordneter Beutel mit einer Beuteleinspeisung;
b) sequenzielles Übergeben der liegenden Beutel an eine Vorrichtung der zuvor beschriebenen Art;
c) liegendes Transportieren der Beutel mit einem Förderer der Vorrichtung in einer Förderrichtung; und
d) sequenzielles Aufrichten jeweils einer ersten Kante der Beutel.

Für das Aufrichten kann jeweils die erste Kante des Beutels auf eine entlang der Förderrichtung ansteigende Rampe des Förderers oder auf einer Anlaufschräge des Förderers auflaufen.

Die erste Kante kann für das Aufrichten mit dem Förderer entlang eines die Förderbreite des Förderers senkrecht zur Förderrichtung in der Förderrichtung verjüngenden Anschlags geführt werden.

Das Verfahren kann weiterhin das Greifen der aufgerichteten ersten Kante des Beutels mit einem Beutelgreifer des Umlaufsystems aufweisen. Vorzugsweise, jedoch nicht zwingend, wird dabei der Beutelgreifer in einer vertikalen Ebene entlang des Umlaufsystems geführt. Besonders bevorzugt, jedoch nicht zwingend, wird der Beutelgreifer entlang eines vertikalen Kreisbahnabschnitts auf die aufgerichtete erste Kante des Beutels eingeschwenkt.

Während die Kante vor dem Aufrichten vorzugsweise in einer horizontalen Ebene des liegenden Beutels angeordnet ist, kann sie in ihrer aufgerichteten Stellung demgegenüber um wenigstens 45° nach oben verschwenkt sein, vorzugsweise um mindestens 60° und besonders bevorzugt um mindestens 80°. Bei einer Ausführungsform ist die erste Kante in der aufgerichteten Stellung um 90° aus der Horizontalen herausgeschwenkt, mithin im Wesentlichen senkrecht ausgerichtet.

Weitere Einzelheiten der Erfindung werden anhand der nachstehenden Figuren erläutert. Dabei zeigt:
- Figur 1: eine beispielhafte Ausführungsform einer Vorrichtung für die Übergabe von Beuteln von einer Beuteleinspeisung an ein Umlaufsystem;
- Figur 2: einen Ausschnitt aus einer Beutelverpackungsmaschine gemäß einer Ausführungsform der Erfindung;
- Figur 3: in schematischer Darstellung das Aufrichten der ersten Kante sowie das Übergeben des Beutels an ein Umlaufsystem gemäß einer Ausführungsform der Erfindung;
- Figur 4: einen Ausschnitt einer weiteren Ausführungsform einer Beutelverpackungsmaschine mit vertikal geführtem Umlaufsystem und einem zusätzlichen Rundgangsystem; und
- Figur 5: einen Ausschnitt einer weiteren Ausführungsform einer Beutelverpackungsmaschine mit horizontal geführtem Umlaufsystem.

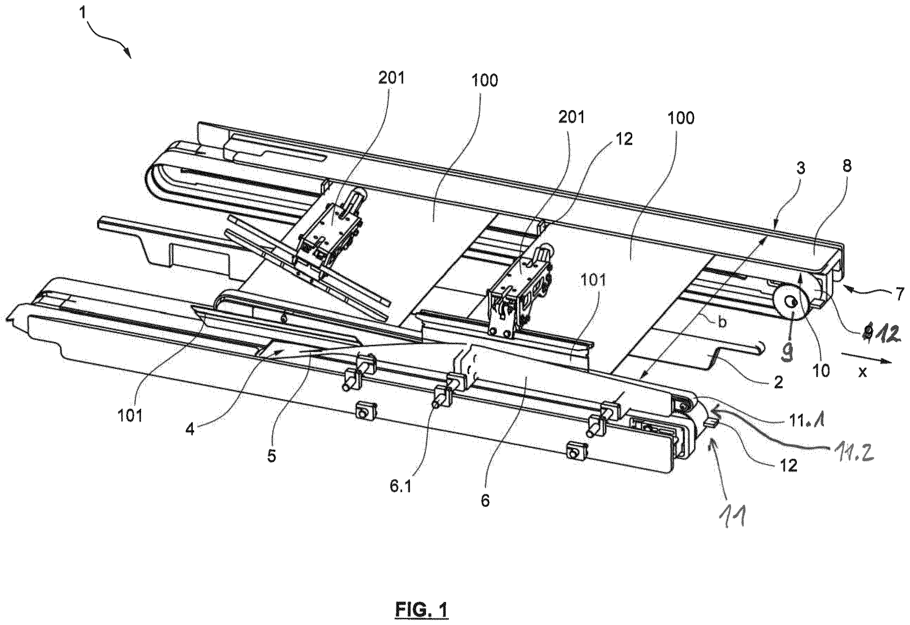

In Figur 1 ist eine beispielhafte Ausführungsform einer erfindungsgemäßen Vorrichtung gezeigt. Die Erfindung ist weder auf die Ausführungsform nach Figur 1, noch auf eine der Ausführungsformen beschränkt, die in den übrigen Figuren gezeigt sind.

Bei der Ausführungsform der Vorrichtung 1 gemäß Figur 1 werden Folienbeutel 100 als leere, zusammengefaltete, mithin flache Beutel 100 in der Förderrichtung x liegend transportiert. Die Beutel können beispielsweise als Standbodenbeutel mit gefaltetem Standboden bereitgestellt sein. Die liegenden Beutel können somit eine Dicke in Vertikalrichtung aufweisen, die wesentlich kleiner als jede der Kantenlängen des Beutels 100 ist. Die Dicke kann wenige Millimeter betragen, beispielsweise 2 mm. Der Beutel 100 weist eine erste Kante 101 auf, an welcher die Öffnung des Beutels vorgesehen ist. Die erste Kante 101 bildet mithin eine Oberkante des Beutels 100, sodass die Öffnung eine Einfüllöffnung des Beutels 100 für das Befüllen des Beutels 100 ist. Die Öffnung kann dadurch bereitgestellt sein, dass zwei die Seitenwände des Beutels 100 bildende Seitenwände im Bereich der Öffnung nicht miteinander gesiegelt sind, während die Seitenwände an ihren beiden Außenkanten sowie am Boden, beispielsweise am Standboden, eine Siegelnaht aufweisen.

Bei dem Transport der Beutel 100 in der Förderrichtung x laufen die Beutel 100 auf ein Hebeelement 4 für das Aufrichten der ersten Kante 101 des Beutels 100 auf. Das Hebemittel 4 ist vorliegend als eine ansteigende Rampe oder als eine Anlaufschräge ausgebildet. Zusätzlich weist das Hebeelement 4 einen die Förderbreite b des Förderers senkrecht zur Förderrichtung x in der Förderrichtung x verjüngenden Anschlag 6 auf. Der Anschlag weist einen vertikalen Flansch auf, An dem die erste Kante 101 zur Anlage kommt. Der Anschlag 6, insbesondere der vertikale Flansch, ist mithilfe eines Stellantriebs 6.1 in der Förderrichtung x verstellbar, um das Hebeelement 4, insbesondere den Anschlag 6, auf eine gegebene Beutelhöhe, gemessen zwischen dem Beutelboden und der ersten Kante 101 bzw. der Öffnung des Beutels, einzustellen.

Es ist zu erkennen, dass das Umlaufsystem 200 Beutelgreifer 201 mit jeweils einem Paar Greiferbacken aufweist, die dazu eingerichtet sind, den Beutel 100 an der aufgerichteten ersten Kante 101 zu greifen. Da der Beutel 100 vorzugsweise ein biegeschlaffes Teil ist, weisen die Greiferbacken vorzugsweise ein Länge auf, die sich im Wesentlichen über die gesamte Länge der ersten Kante 101 erstreckt, sodass der Beutel 100 durch das Greifen an der ersten Kante 101 eine Stabilisierung erfährt.

Die Höhe des Beutels 100 zwischen dem Beutelboden und der Beutelöffnung erstreckt sich somit in Richtung der Förderbreite b des Förderers 3. Mithin werden die Beutel 100 in der Horizontalen und senkrecht zu ihrer Höhe in der Förderrichtung x transportiert.

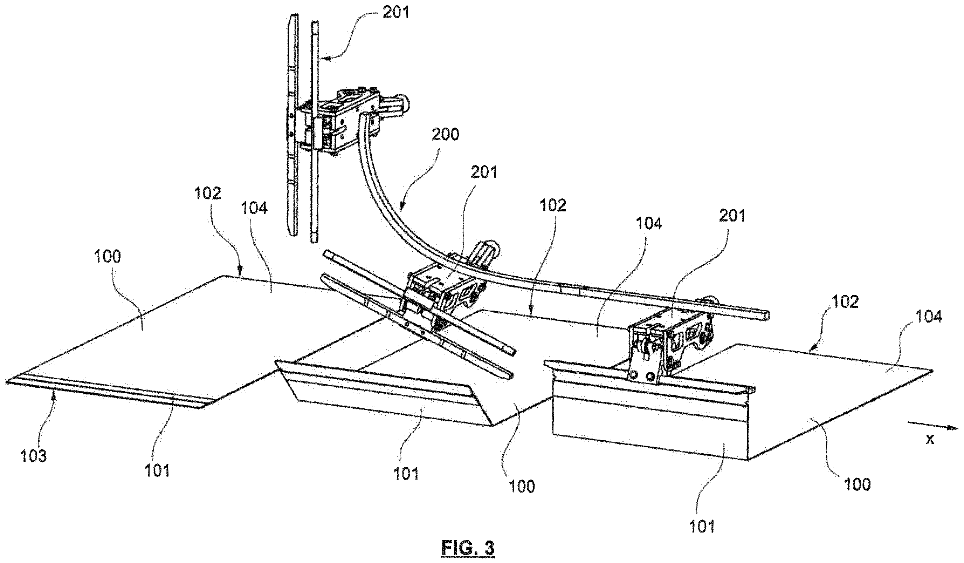

Der Förderer 3 weist ein Haltemittel 7 auf, das dazu eingerichtet ist, den Beutel 100 an seiner der ersten Kante 101 gegenüberliegenden zweiten Kante 104 (vgl. Figur 3) zu halten. Das Haltemittel 7 weist einen feststehenden Höhenanschlag 8 und einen ersten Bandförderer 9 auf. Der Höhenanschlag 8 und der Bandförderer 9 schließen zwischen sich einen sich in der Förderrichtung x erstreckenden Haltespalt 10 für die Aufnahme der zweiten Kante 104 des Beutels 100 ein. Für den Vortrieb der Beutel 100 in der Förderrichtung x weist der Bandförderer 9 ein Stollenband 12 auf. Die zweite Kante 104 ist in dem Spalt 10 freilaufend aufgenommen, sodass der Folienbeutel, ohne zu stauchen, von dem Stollenband 12 angetrieben werden kann. Der Förderer kann insbesondere dazu eingerichtet sein, den Beutel 100, ausschließlich der ersten Kante 101, in seiner Beutelebene aufzuspannen, sodass er als planer Beutel bereitgestellt ist. Des Weiteren ist sichergestellt, dass die erste Kante 101 frei beweglich bleibt.

Das Aufspannen kann sich darauf beschränken, dass der Beutel 100 an der der ersten Kante 101 gegenüberliegenden zweiten Kante 104 von dem Förderer 3 gehalten wird, beispielsweise in dem Spalt 10 freilaufend, jedoch in der Vertikalrichtung in seiner Bewegungsfreiheit eingeschränkt, aufgenommen ist.

Der Förderer 3 weist bei der dargestellten Ausführungsform neben dem ersten Bandförderer 9 weiterhin einen zweiten Bandförderer 11.1, 11.2 auf, der um eine Abmessung von der ersten Kante 101 beabstandet einen Beutel 100 angreift. Auf diese Weise kann sichergestellt werden, dass die erste Kante 101 frei beweglich bleibt, um beim Anlaufen des Hebeelements 4 aus der Horizontalen angehoben werden zu können.

Eine Kufe 2 stützt den Beutel 100, der ein biegeschlaffes Teil ist, in einem Bereich zwischen dem ersten Bandförderer 9 und dem zweiten Bandförderer 11.1, 11,2.

Der zweite Bandförderer 11.1 11.2 weist einen oberen Bandförderer 11.1 und eine unteren Bandförderer 11.2 auf. Zwischen dem oberen Bandförderer 11.1 und im unteren Bandförderer 11.2 steht die Beutelkante 101 im Reibschluss mit den Bandförderern 11.1, 11.2. Die beiden Bandförderern 11.1., 11.2 weisen vorzugsweise dieselbe Vorschubgeschwindigkeit auf, insbesondere können sie gleichlaufend sein. Demgemäß können die Transportbänder der Bandförderern 11.1, 11.2 keine Relativgeschwindigkeit zueinander aufweisen. Zwischen dem oberen Bandförderer 11.1 und im unteren Bandförderern 11.2 kann ein Anpressdruck bereitgestellt sein, der die Beutekante 101 hält, vorzugsweise im Reibschluss hält.

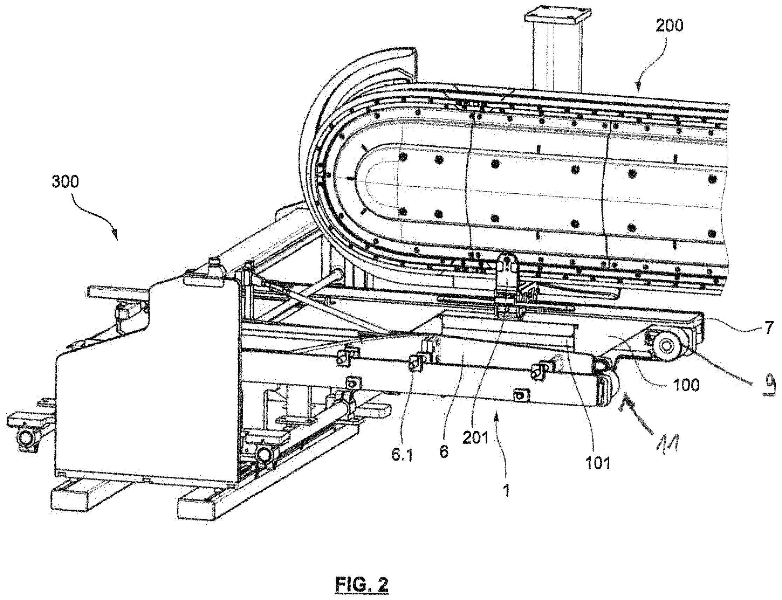

Die Figur 2 zeigt eine Anordnung aus einer Vorrichtung 1 sowie einem Umlaufsystem 200 sowie einer Beuteleinspeisung 300. Die Beuteleinspeisung 300 kann ein Beutelmagazin und/oder eine Beutelherstellung aufweisen und ist ebenso wie das Umlaufsystem 200 auf keine bestimmten Ausführungsformen beschränkt. Die Beuteleinspeisung 300 kann beispielsweise eine Vorrichtung zur Vorproduktion von Folienbeuteln sein oder aufweisen. Die Beuteleinspeisung 300 kann ebenso dazu eingerichtet sein, vorproduzierte Beutel vorzuhalten und zu vereinzeln, um sie in die Vorrichtung 1 einzuspeisen.

Das Umlaufsystem 200 ist bei der vorliegenden Ausführungsform mit einer vertikalen Umlaufebene ausgebildet, innerhalb welcher Greifer 201 in einer Kreis- oder Ellipsenbahn geführt sind. Bei einer Variante der Ausführungsform gemäß Figur 2 ist die Vorrichtung 1 entsprechend der Vorrichtung 1 gemäß Figur 1 ausgebildet.

Figur 3 zeigt in schematischer Darstellung einen beispielhaften Übergabevorgang von Beuteln 100, die in einer erfindungsgemäßen Vorrichtung in der Förderrichtung x transportiert werden. Der in der Darstellung gemäß Figur 3 am weitesten links angeordnete Beutel 100 ist in einer vollständig horizontalen Ausrichtung angeordnet. Sämtliche Außenkanten, einschließlich des Bodens 102 sowie die Öffnung 103 sind in derselben Ebene, vorliegend in der Horizontalebene angeordnet. Demgegenüber befindet sich die erste Kante 101 des mittleren Beutels 100 in einer teilweise aus der Horizontalen herausgeklappten Stellung. Während übrige Anteile des Beutels 100 weiterhin in der Horizontalen gehalten sind, ist die Kante 101 um einen Winkel von weniger als 90° aus der Horizontalen nach oben geschwenkt. Synchron zu dem Vorschub der Beutel 100 in der Förderrichtung x werden Greifer 201 des Umlaufsystems 200 entlang eines vertikalen Kreisbogens transportiert und den Beuteln 100 angenähert.

Der in Figur 3 ganz rechts angeordnete Beutel 100 weist eine um 90° aus der Horizontalen herausgeschwenkte erste Kante 101, mithin ist die Kante 101 vertikal ausgerichtet und erstreckt sich entsprechend senkrecht zu den übrigen Anteilen des Beutels 100. Sogleich wurde sowohl der Greifer 201 der Kante 101 weiter angenähert, sodass in der relativen Anordnung von Kante 101 und Greifer 201 in der am weitesten rechten Paarung von Greifer 201 und Beutel 100 gemäß Figur 3 die Kante 101 in den Greifer 201, insbesondere zwischen die Greiferbacken des Greifers eingeschwenkt ist und der Greifer 201 die Kante 101 prozesssicher greifen und den Beutel 100 für die weitere Förderung von dem (nicht eingezeichneten) Förderer 3 abheben kann.

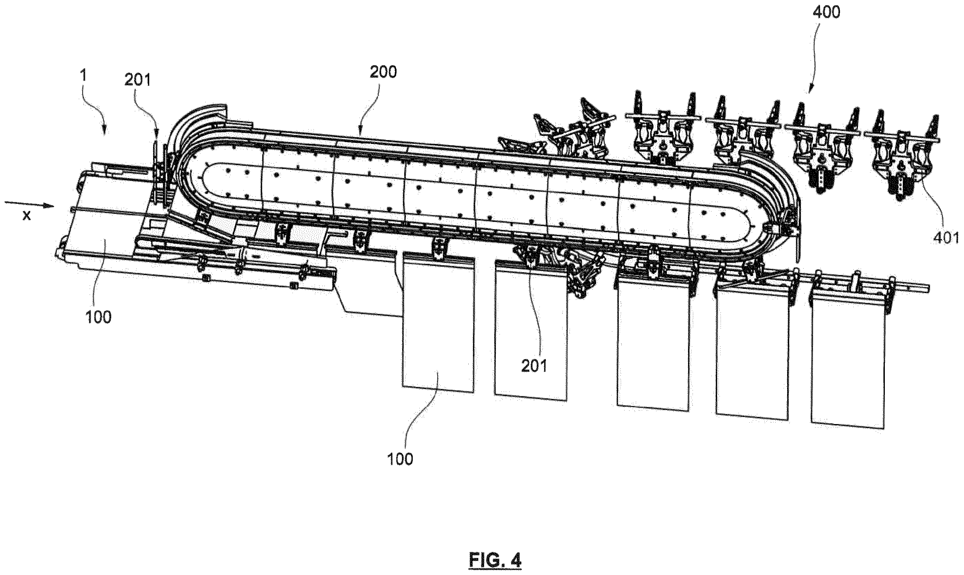

In Figur 4 ist gezeigt, dass nach der Übergabe von dem Beutel 100 an das Umflaufsystem 200 die Beutel ein weiteres Mal an ein Rundgangsystem 400 mit einer Vielzahl umlaufender Greifer 401 übergeben werden können. Das Rundgangsystem kann beispielsweise eine Ausführungsform sein, wie sie aus der DE 20 2014 102 116 U1 bekannt ist. Während die Greifer 201 des Umlaufsystems 200 in einer vertikalen Ebene transportiert sind, sind die Greifer 401 des Rundgangsystems 400 in einer horizontalen Ebene gefördert.

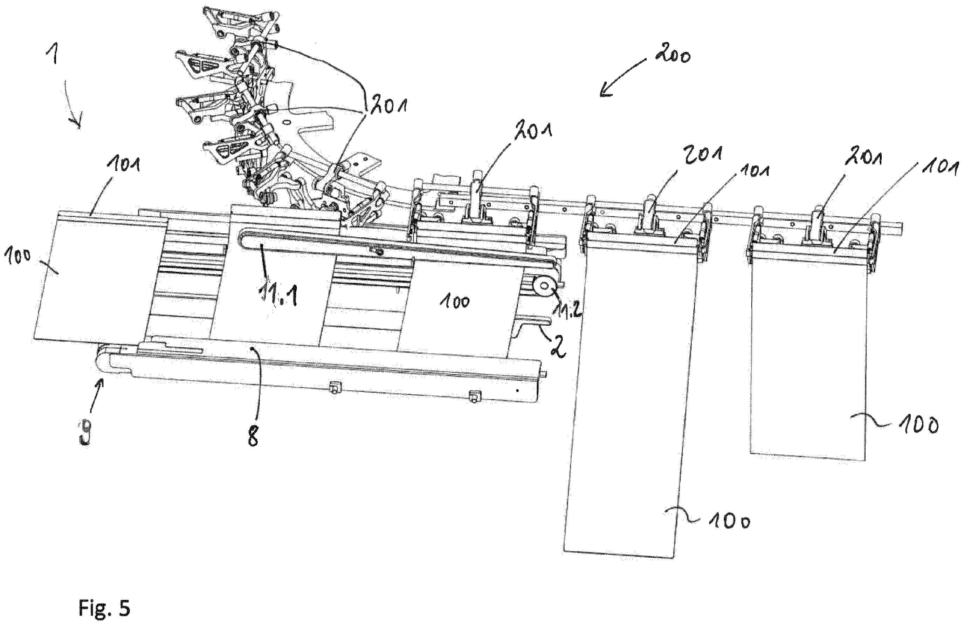

Die Figur 5 zeigt eine weitere Ausführungsform, bei der abweichend von der Ausführungsform gemäß Figur 4 das Umlaufsystem 200 horizontal geführt ist und nicht vertikal. Demgemäß kann das Umlaufsystem 200 gemäß Figur 5 als ein Rundgangsystem 400 (vergleiche Figur 4) ausgebildet sein, mit dem der Beutel 100 Bearbeitungsstationen einer Beutelverpackungsmaschine zugeführt wird, Beispielsweise einer Abfüllstation, einer Siegelstation oder dergleichen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Vorrichtung
- 2: Kufe
- 3: Förderer
- 4: Hebeelement
- 5: Rampe oder Anlaufschräge
- 6: Anschlag
- 6.1: Stellantrieb
- 7: Haltemittel
- 8: Höhenanschlag
- 9: erster Bandförderer
- 10: Haltespalt
- 11: zweiter Bandförderer
- 11.1: Oberer Bandförderer
- 11.2: Unterer Bandförderer
- 12: Stollenband
- 100: Beutel
- 101: erste Kante
- 102: Beutelboden
- 103: Beutelöffnung
- 104: zweite Kante
- 200: Umlaufsystem
- 201: Greifer des Umlaufsystems
- 300: Beuteleinspeisung
- 400: Rundgangsystem
- 401: Greifer des Rundgangsystems
- b: Förderbreite
- x: Förderrichtung

## Patentansprüche

1. Vorrichtung (1) für die Übergabe von Beuteln (100) von einer Beuteleinspeisung (300) an ein Umlaufsystem (200) einer Beutelverpackungsmaschine, **dadurch gekennzeichnet, dass** die Vorrichtung (1) einen Förderer (3) für den liegenden Transport einzelner leerer Beutel (100) aufweist, wobei der Förderer (3) in seiner Förderrichtung (x) stromabwärtsseitig ein Hebeelement (4) für das Aufrichten einer ersten Kante (101) eines Beutels (100) aufweist.

2. Vorrichtung (1) nach Anspruch 1, bei der das Hebeelement (4) eine entlang der Förderrichtung ansteigende Rampe (5) oder Anlaufschräge aufweist.

3. Vorrichtung (1) nach Anspruch 1 oder 2, bei der das Hebeelement (4) einen die Förderbreite (b) des Förderers (3) senkrecht zur Förderrichtung (x) in der Förderrichtung (x) verjüngenden Anschlag (6) für eine aufzurichtende erste Kante (101) eines Beutels (100) aufweist, wobei der Anschlag (6) vorzugsweise in der Richtung senkrecht zur Förderrichtung (x) verstellbar ist.

4. Vorrichtung (1) nach Anspruch 3, bei der die minimale Förderbreite (b) um eine Abmessung kleiner als eine Beutelhöhe zwischen Beutelboden (102) und Öffnung (103) eines zu transportierenden Beutels (100) ist, um welche die erste Kante (101) des zu transportierenden Beutels (100) aufgerichtet werden soll.

5. Vorrichtung (1) nach einem der vorangegangenen Ansprüche, bei der der Förderer (3) ein Haltemittel (7) aufweist, das dazu eingerichtet ist, einen Beutel (100) an einer der ersten Kante (101) gegenüberliegenden zweiten Kante (104) zu halten.

6. Vorrichtung (1) nach Anspruch 5, bei der das Haltemittel (7) einen feststehenden Höhenanschlag (8) und einen ersten Bandförderer (9) aufweist, die zwischen sich einen sich in der Förderrichtung (x) erstreckenden Haltespalt (10) für die Aufnahme der zweiten Kante (104) einschließen.

7. Vorrichtung (1) nach einem der vorangegangenen Ansprüche, bei der der Förderer (3) einen ersten Bandförderer (9) aufweist, der mit einer der ersten Kante (101) gegenüberliegenden zweiten Kante (104) im Reibschluss steht.

8. Vorrichtung (1) nach einem der vorangegangenen Ansprüche, bei der der Förderer (3) dazu eingerichtet ist, den Beutel (100), ausschließlich der ersten Kante (101), in seiner Beutelebene aufzuspannen, so dass die erste Kante (101) frei beweglich ist.

9. Vorrichtung (1) nach Anspruch 8, bei der der Förderer (3) einen ersten Bandförderer (9) aufweist, der an einer der ersten Kante (101) gegenüberliegenden zweiten Kante (104) angreift, und wobei der Förderer (3) einen zweiten Bandförderer (11) aufweist, der um eine Abmessung von der ersten Kante (101) beabstandet an dem Beutel (100) angreift.

10. Vorrichtung (1) nach einem der Ansprüche 6 bis 9, bei der der erste Bandförderer (9) und/oder der zweite Bandförderer (11) ein umlaufendes Stollenband (12) aufweist.

11. Beutelverpackungsmaschine mit einem Umlaufsystem (200) mit einer Vielzahl in Transportrichtung des Umlaufsystems (200) voneinander beabstandeter Beutelgreifer (201), einer Beuteleinspeisung (300) sowie einer Vorrichtung (1) nach einem der vorangegangenen Ansprüche, wobei der Förderer (3) in seiner Förderrichtung (x) stromabwärts in einen Zugriffsbereich (202) des Umlaufsystems (200) mündet, in dem ein Beutelgreifer (201) des Umlaufsystems (200) in Eingriff mit einer aufgerichteten ersten Kante (101) eines von dem Förderer (3) liegend transportierten Beutels (100) gelangt, wobei vorzugsweise die Beutelgreifer (201) in einer vertikalen Ebene entlang des Umlaufsystems (200) geführt sind, und wobei besonders bevorzugt die Beutelgreifer (201) in dem Zugriffsbereich (202) entlang eines vertikalen Kreisbahnabschnitts geführt sind.

12. Verfahren für die Übergabe von Beuteln (100) von einer Beuteleinspeisung (300) an ein Umlaufsystem (200) einer Beutelverpackungsmaschine, das die Schritte aufweist:
a) Bereitstellen einer Vielzahl liegend angeordneter Beutel (100) mit einer Beuteleinspeisung (300);
b) sequenzielles Übergeben der liegenden Beutel (100) an eine Vorrichtung (1) nach einem der Ansprüche 1-10;
c) liegendes Transportieren der Beutel (100) mit einem Förderer (3) der Vorrichtung (1) in einer Förderrichtung (x); und
d) sequenzielles Aufrichten einer ersten Kante (101) der Beutel (100).

13. Verfahren nach Anspruch 12, bei dem die erste Kante (101) für das Aufrichten auf eine entlang der Förderrichtung (x) ansteigende Rampe (5) oder Anlaufschräge aufläuft.

14. Verfahren nach Anspruch 12 oder 13, bei dem die erste Kante (101) für das Aufrichten mit dem Förderer (3) entlang eines die Förderbreite (b) des Förderers (3) senkrecht zur Förderrichtung (x) in der Förderrichtung (x) verjüngenden Anschlags (6) geführt wird.

15. Verfahren nach einem der Ansprüche 12 bis 14, das weiterhin das Greifen der aufgerichteten ersten Kante (101) des Beutels (100) mit einem Beutelgreifer (201) des Umlaufsystems (200) aufweist, wobei vorzugsweise die Beutelgreifer (201) in einer vertikalen Ebene entlang des Umlaufsystems (200) geführt werden, und wobei besonders bevorzugt die Beutelgreifer (201) entlang eines vertikalen Kreisbahnabschnitts auf die aufgerichtete erste Kante (101) eingeschwenkt werden.

## Geänderte Patentansprüche

### Geänderte Patentansprüche gemäss Regel 137(2) EPÜ.

1. Vorrichtung (1) für die Übergabe von Beuteln (100) von einer Beuteleinspeisung (300) an ein Umlaufsystem (200) einer Beutelverpackungsmaschine, wobei die Vorrichtung (1) einen Förderer (3) für den liegenden Transport einzelner leerer Beutel (100) aufweist, wobei der Förderer (3) in seiner Förderrichtung (x) stromabwärtsseitig ein Hebeelement (4) für das Aufrichten einer ersten Kante (101) eines Beutels (100) aufweist, **dadurch gekennzeichnet, dass** das Hebeelement (4) eine entlang der Förderrichtung ansteigende Rampe (5) oder Anlaufschräge aufweist.

2. Vorrichtung (1) nach Anspruch 1, bei der das Hebeelement (4) einen die Förderbreite (b) des Förderers (3) senkrecht zur Förderrichtung (x) in der Förderrichtung (x) verjüngenden Anschlag (6) für eine aufzurichtende erste Kante (101) eines Beutels (100) aufweist, wobei der Anschlag (6) vorzugsweise in der Richtung senkrecht zur Förderrichtung (x) verstellbar ist.

3. Vorrichtung (1) nach Anspruch 2, bei der die minimale Förderbreite (b) um eine Abmessung kleiner als eine Beutelhöhe zwischen Beutelboden (102) und Öffnung (103) eines zu transportierenden Beutels (100) ist, um welche die erste Kante (101) des zu transportierenden Beutels (100) aufgerichtet werden soll.

4. Vorrichtung (1) nach einem der vorangegangenen Ansprüche, bei der der Förderer (3) ein Haltemittel (7) aufweist, das dazu eingerichtet ist, einen Beutel (100) an einer der ersten Kante (101) gegenüberliegenden zweiten Kante (104) zu halten.

5. Vorrichtung (1) nach Anspruch 4, bei der das Haltemittel (7) einen feststehenden Höhenanschlag (8) und einen ersten Bandförderer (9) aufweist, die zwischen sich einen sich in der Förderrichtung (x) erstreckenden Haltespalt (10) für die Aufnahme der zweiten Kante (104) einschließen.

6. Vorrichtung (1) nach einem der vorangegangenen Ansprüche, bei der der Förderer (3) einen ersten Bandförderer (9) aufweist, der mit einer der ersten Kante (101) gegenüberliegenden zweiten Kante (104) im Reibschluss steht.

7. Vorrichtung (1) nach einem der vorangegangenen Ansprüche, bei der der Förderer (3) dazu eingerichtet ist, den Beutel (100), ausschließlich der ersten Kante (101), in seiner Beutelebene aufzuspannen, so dass die erste Kante (101) frei beweglich ist.

8. Vorrichtung (1) nach Anspruch 7, bei der der Förderer (3) einen ersten Bandförderer (9) aufweist, der an einer der ersten Kante (101) gegenüberliegenden zweiten Kante (104) angreift, und wobei der Förderer (3) einen zweiten Bandförderer (11) aufweist, der um eine Abmessung von der ersten Kante (101) beabstandet an dem Beutel (100) angreift.

9. Vorrichtung (1) nach einem der Ansprüche 5 bis 8, bei der der erste Bandförderer (9) und/oder der zweite Bandförderer (11) ein umlaufendes Stollenband (12) aufweist.

10. Beutelverpackungsmaschine mit einem Umlaufsystem (200) mit einer Vielzahl in Transportrichtung des Umlaufsystems (200) voneinander beabstandeter Beutelgreifer (201), einer Beuteleinspeisung (300) sowie einer Vorrichtung (1) nach einem der vorangegangenen Ansprüche, wobei der Förderer (3) in seiner Förderrichtung (x) stromabwärts in einen Zugriffsbereich (202) des Umlaufsystems (200) mündet, in dem ein Beutelgreifer (201) des Umlaufsystems (200) in Eingriff mit einer aufgerichteten ersten Kante (101) eines von dem Förderer (3) liegend transportierten Beutels (100) gelangt, wobei vorzugsweise die Beutelgreifer (201) in einer vertikalen Ebene entlang des Umlaufsystems (200) geführt sind, und wobei besonders bevorzugt die Beutelgreifer (201) in dem Zugriffsbereich (202) entlang eines vertikalen Kreisbahnabschnitts geführt sind.

11. Verfahren für die Übergabe von Beuteln (100) von einer Beuteleinspeisung (300) an ein Umlaufsystem (200) einer Beutelverpackungsmaschine, das die Schritte aufweist:
a) Bereitstellen einer Vielzahl liegend angeordneter Beutel (100) mit einer Beuteleinspeisung (300);
b) sequenzielles Übergeben der liegenden Beutel (100) an eine Vorrichtung (1) nach einem der Ansprüche 1-9;
c) liegendes Transportieren der Beutel (100) mit einem Förderer (3) der Vorrichtung (1) in einer Förderrichtung (x); und
d) sequenzielles Aufrichten einer ersten Kante (101) der Beutel (100),
**dadurch gekennzeichnet, dass** die erste Kante (101) für das Aufrichten auf eine entlang der Förderrichtung (x) ansteigende Rampe (5) oder Anlaufschräge aufläuft.

12. Verfahren nach Anspruch 11, bei dem die erste Kante (101) für das Aufrichten mit dem Förderer (3) entlang eines die Förderbreite (b) des Förderers (3) senkrecht zur Förderrichtung (x) in der Förderrichtung (x) verjüngenden Anschlags (6) geführt wird.

13. Verfahren nach Anspruch 11 oder 12, das weiterhin das Greifen der aufgerichteten ersten Kante (101) des Beutels (100) mit einem Beutelgreifer (201) des Umlaufsystems (200) aufweist, wobei vorzugsweise die Beutelgreifer (201) in einer vertikalen Ebene entlang des Umlaufsystems (200) geführt werden, und wobei besonders bevorzugt die Beutelgreifer (201) entlang eines vertikalen Kreisbahnabschnitts auf die aufgerichtete erste Kante (101) eingeschwenkt werden.
